# EUROPEAN PATENT SPECIFICATION

(11) **EP 4 311 702 B1**
(45) Date of publication and mention of the grant of the patent: **04.09.2024**
(21) Application number: 22187918.2
(22) Date of filing: 29.07.2022
(51) Int. Cl.: B60K 13/04, B60K 15/035, B60K 15/04

(54) **FILLER HEAD ALLOWING A RELIABLE REFILLING WITHOUT SPITTING**
FÜLLKOPF ZUR ERMÖGLICHUNG VON ZUVERLÄSSIGEM NACHFÜLLEN OHNE AUSSTOSS
TÊTE DE REMPLISSAGE PERMETTANT UN REMPLISSAGE FIABLE SANS PROJECTION

(43) Date of publication of application: 31.01.2024
(73) Proprietor: Plastic Omnium Advanced Innovation and Research, 1200 Bruxelles (BE); TOYOTA JIDOSHA KABUSHIKI KAISHA, Toyota-shi, Aichi-ken, 471-8571 (JP)
(72) Inventor: KENSUKE, Suzuki, 1130 BELGIQUE (BE); TSUZUKU, Yasunari, TOYOTA-SHI, 471-8571 (JP)
(74) Representative: LLR

(56) References cited:
- WO-A1-2019/149750
- WO-A1-2021/152071
- DE-T2- 69 305 024
- US-A1- 2022 080 825
- US-B2- 9 539 898

## Description

### FIELD OF THE INVENTION

The invention relates to a filler head allowing a reliable refilling with a nozzle (automatic or not) of a fluid tank, such an automotive tank, without spitting, *i.e.* without any fluid that spits back from the filler head during refilling stage.

### BACKGROUND OF THE INVENTION

Legislation on vehicle and truck emissions stipulates, amongst other things, a reduction in the release of nitrogen oxides NOₓ into the atmosphere. One known way to achieve this objective is to use the "SCR" (shortening from terms "Selective Catalytic Reduction") process which enables the reduction of nitrogen oxides by injection of a reducing agent, such as ammonia, into the exhaust line. Generally, a SCR system comprises a tank for the storage of an aqueous additive, such as a urea solution, a pump for conveying the aqueous additive in the feed line, and a device for metering the desired amount of aqueous additive and injecting it into the exhaust line. The aqueous additive is thus accurately metered and injected into the exhaust gas stream where it is hydrolysed before converting the nitrogen oxide (NOₓ) to nitrogen (N₂) and water (H₂O).

The distribution of urea solution, sometimes called adblue^{®}, is known for trucks for many years. The tank volume being important in the range of trucks, it has been developed distribution system apart from fuel delivery with a filling rate of 40 l.min⁻¹ (ISO222-41-4 norm).and urea tanks with large inlet diameter.

Regarding passenger cars, initial market demand was to design filler heads compatible for manual filling with a screw-on bottle. The filling was done by gravity and was usually slow around 3 l.min⁻¹ (ISO222-41-5 norm). However, due to the urea solution consumption increasing because of stricter depollution levels, it becomes more common to regularly fill the urea solution tank. However, consumers have noticed that they could already be supplied with the dispensers for trucks and thus have imposed a unique delivery rate in contrast to what was contemplated.

As a result, carmakers now request to design SCR systems compatible with automatic filling technology initially designed for heavy duty application as well as with manual filling. Examples of filler heads are disclosed in documents WO 2019/149750 and WO2021152071.

Moreover, at this moment, three kinds of automatic filling technologies are mainly used depending on the sensor included in the nozzle (ZVA nozzle sensor, Horn nozzle sensor or PIUSI nozzle sensor). Each sensor is not mounted at the tip of the nozzle (as ZVA nozzle) but may also be mounted in the upstream direction of the nozzle (as Horn and PIUSI nozzle sensors) up to 16 mm from the tip.

Consequently, a lot of conflicting specifications have to be met such as a small diameter of the existing screw-on bottles with a high rate of filling up to 40 l.min⁻¹ whatever the kind of sensor used in the nozzle.

### SUMMARY OF THE INVENTION

The invention aims to provide a filler head avoiding the spitting from the filler head before and during the auto-stop nozzle shut off as well as allowing a quicker sensing of the auto-stop sensor of the refilling nozzle.

Hence, the object of the invention is a filler head for a storage system comprising a body including a main part closed by a cover part so as to form a cavity in which a separating device is received, the filler head being configured to receive, in a cylindrical wall of the separating device extending around the filling direction, a distribution nozzle of a fluid with an auto-stop sensor to prevent overfilling of the filler head, the filler head being configured to be connected to a filling line and a venting line of a fluid tank and the separating device being arranged to improve the partitioning of the flow coming from the venting line and the flow going to the filling line, **characterised in that** a top end of the separating device facing the cover part of the body comprises at least one notch improving, when the nozzle is received in the cylindrical wall of the separating device, the pressure balance in the filler head so as to ensure that the fluid outgoing from the nozzle has limited possibility to spit back from the filler head during the auto-stop nozzle shut off.

According to the invention, with help of each notch, a better fluid circulation between internal and external volume of the cylindrical wall is obtained so as to avoid a lower pressure to be exerted in the region between the top end and the cover part that may incur locally a suction effect of the fluid near the tip of the nozzle sufficiently high to expel it from the filler head.

The invention may also include one or more of the following optional features, taken alone or in combination.

The top end of the separating device may be an annular wall, and the at least one notch can form a through passage in the thickness of the annular wall allowing a better fluid communication between internal and external volume of the cylindrical wall by increasing locally the gap between the top end and the cover part.

A buffer volume may be configured to be connected to the venting line and to reduce the speed of flow coming from the venting line. The buffer volume may be in one-piece laterally with the main part. A common wall of the main part and the buffer volume may comprise an aperture allowing the passage of the flow coming from the venting line into the cavity of the body. This configuration allows a further improvement regarding the aim of avoiding any spitting from the filler head, a better reduction of the speed of the flow coming from the venting line as well as a better bursting of the air bubbles along the wall of the buffer volume regardless the volume of the tank and/or the refilling rate.

The cylindrical wall may comprise at least one hole in the top end of the separating device that allows the flow of fluid coming from the venting line to pass through the cylindrical wall in order to be expelled outside the filler head. At least four flanges, protruding preferably transversally from the outside surface of the cylindrical wall, may be mounted surrounding the aperture of the buffer volume so as to form a channel towards the at least one hole permitting to improve the partitioning of a flow coming from a venting line and the flow going to the filling line. Thus, when emerging from the aperture, the flow coming from a venting line is substantially only able to communicate with the at least one hole 31 in an upstream level in view of the filling flow direction.

The cover part may comprise a protruding guiding element to guide the distribution nozzle to the separating device. The protruding guiding element may be closed in a sealed manner by a cap when nozzle is not received in the separating device.

The inner surface of the protruding guiding element may have at least one groove so as, when nozzle is received in the protruding guiding element, to allow the flow coming from the venting line to be expelled outside the filler head via the at least one groove.

A bottom end of the separating device facing the main part of the body comprises a securing element mounted onto the external surface of the cylindrical wall so as to cooperate with an internal wall of the main part protruding in the cavity to secure the separation device in the cavity as an extension of the inner wall.

The securing element and the internal wall may have complementary shapes so as to limit the possibility of the fluid to flow between the bottom end of the separating device and the internal wall of the main part. This configuration forms a labyrinth shape between the bottom of the filler head and the separating device.

The internal wall may be in at least partially annular shape and the securing element has a hook shape to grab the free end of the internal wall. The auto-stop nozzle shut off is improved notably because the sensor is able to sense quicker fluid in the filler head.

Another object of the invention is a storage system comprising a fluid tank connected to a filling line configured to guide the gravitational flow of fluid from a filler head to the tank and a venting line configured to compensate de pressure variations in the tank, **characterised in that** the filler head is according to any one of the above embodiments.

### BRIEF DESCRIPTION OF THE DRAWINGS

Other features and advantages of the present invention will appear more clearly upon reading the following detailed description, made with reference to the annexed drawings, provided as a non-limited description, in with:
- Figure 1 is a top schematic view of a vehicle in which the present invention may be applied;
- Figure 2 is a perspective view of a filler head according to the invention;
- Figure 3 is a partial perspective view of the filler head according to the invention;
- Figure 4 is a partial top view of the filler head according to the invention;
- Figure 5 is a vertical cross-sectional view of the filler head according to the invention when receiving the nozzle;
- Figure 6 is a cross-sectional view along the plane VI-VI of the Figure 2;
- Figure 7 is a cross-sectional view along the plane VII-VII of the Figure 2;
- Figure 8 is a cross-sectional view along the plane VIII-VIII of the Figure 2.

### DETAILED DESCRIPTION OF THE PREFERRED EMBODIMENTS

In the various figures, the same or similar elements bear the same references, optionally added with an index. The description of their structure and their function is therefore not systematically restated.

n all the following, the orientations are the usual orientations of the figures. In particular, the terms "upper", "lower", "left", "right", placed above, below, left and right in relation to the view in the figures. Moreover, terms "upstream" and "downstream" generally relates to the location of an element relative to another element regarding the filling flow F direction.

It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

The term "tank" is understood to mean an impermeable tank that can store fluid such as fuel, urea solution or water under versatile and various environmental and usage condition. Examples are a fuel tank for providing fuel (gasoline, diesel, hydrogen, etc.) to a motor vehicle, a urea solution tank for injection in an exhaust device or a water tank for providing water to a motor vehicle.

The expression "SCR system" is understood to mean a system for the catalytic reduction of the NOx from the exhaust gases of an internal combustion engine, preferably of a vehicle 41, using for example a urea solution as liquid additive. The present invention is advantageously applicable to diesel engines, and in particular to the diesel engines of passenger cars or heavy goods vehicles.

Moreover, a urea distribution nozzle 10 can be introduced in a filler head 13 according to the invention. Thus, valves for distribution nozzles 10 that are activated by a magnetic field have been developed. Therefore, when applying to urea tank, filler head 13 must have a magnetic element for activating the valve and allowing the delivery of urea solution.

In the description provided herein, numerous specific details are set forth. However, it is understood that embodiments of the invention may be practiced without these specific details. In other instances, well-known methods, structures and techniques have not been shown in detail in order not to obscure an understanding of this description.

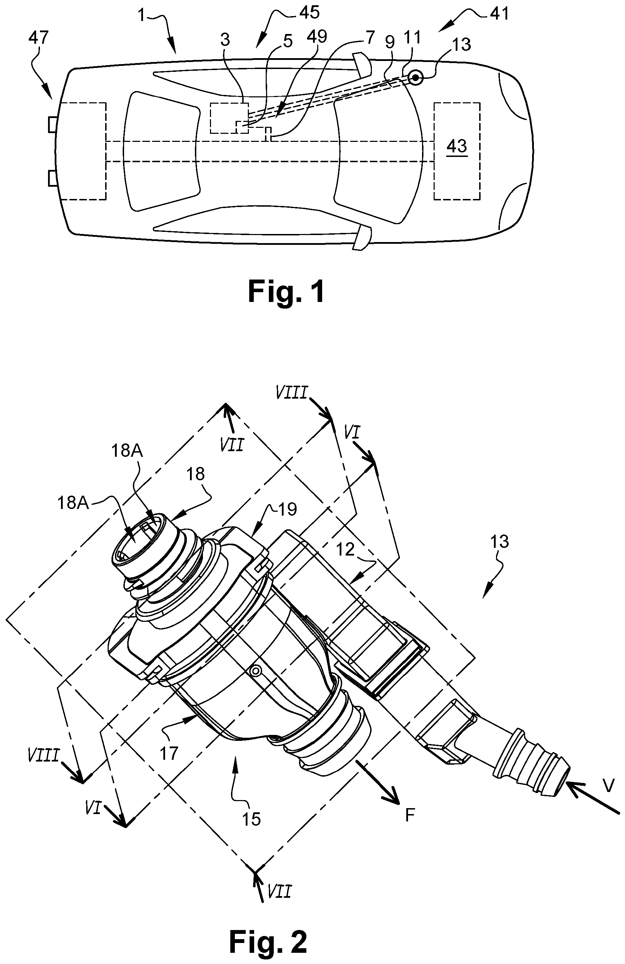

As illustrated in figure 1, the invention relates to a vehicle 41 equipped with a powertrain 43 connected to a depollution system 45. More precisely, the depollution system 45 comprises an exhaust device 47 and an additive injection device 49 in the exhaust device 47 as, for example, a urea solution.

The injection device 49 comprises a storage system 1 including a tank 3 for storing an aqueous additive. The injection device 49 may also include, or not, a plurality of immersed sensors in the aqueous additive such as a level sensor, a temperature sensor and/or a quality sensor which can be of a capacitive effect type, of the ultrasound type or of the mechanical type.

The injection device 49 also comprises a pump 5 associated with an injection element 7 which are managed by a processing unit connected to the central computer of the vehicle 41. The processing unit contains a memory in which coded instructions are stored. When coded instructions are executed by the processing unit, the steps, for example, of an SCR process are performed.

The tank 3 must be regularly refilled with an aqueous additive such as a urea solution or an ammonia solution. The storage system 1 thus comprises a filling line 9, a venting line 11 (also called return line) and the filler head 13. The filling line 9 is configured to guide the gravitational flow of fluid from the filler head 13 to the tank 3. The venting line 11 is configured to compensate pressure variations in the tank 3 during refilling by expelling, from the filler head 13, the fluid (mainly gas comprising air and eventually vapour of liquid contained in the tank 3) contained in the tank 3 that is compressed by the arrival of fluid coming from the filling line 9 in the tank 3.

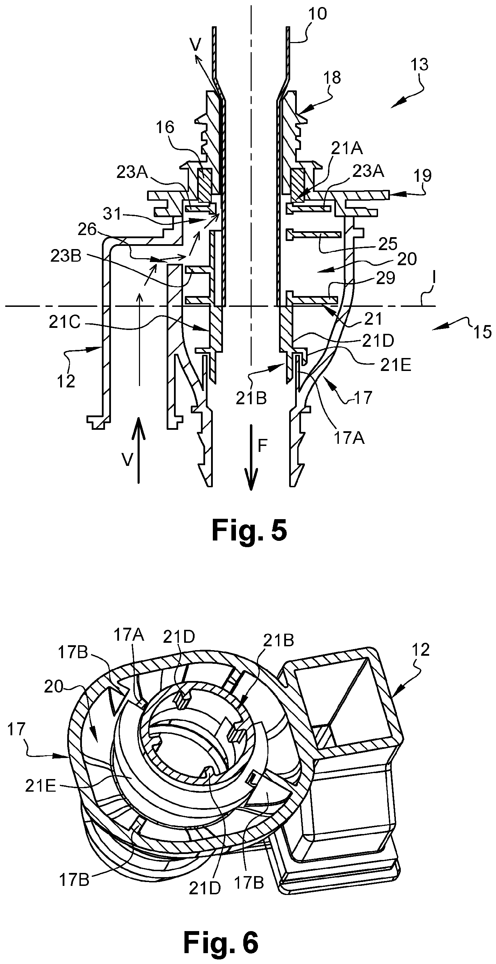

Finally, the filler head 13 is configured to receive the nozzle 10 (shown in figure 5) of fluid distribution system and to be connected to the filling line 9 and the venting line 11, in a sealed manner regarding all kinds of fluid intended to be present in the tank 3 (such as air and aqueous additive). The filler head 13 thus allows, during refilling period, the fluid outgoing from the nozzle 10 to flow into the tank 3 via the filling line 9 and, at the same time, allows the fluid present above the liquid in the tank 3, to be expelled from the tank 3 via the venting line 11 through the filler head 13 to escape into the ambient air (external atmosphere) around the vehicle 41.

The invention aims to provide a new filling system of a fluid tank 3 that is able to withstand a great range of filling rate regardless the volume of the tank 3. More particularly, the invention relates to the optimization of a filler head 13 for avoiding the spitting of aqueous additive from the filler head 13 before and during the auto-stop nozzle 10 shut off as well as allowing a quicker sensing of the auto-stop sensor of the refilling nozzle 10.

Hence, the object of the invention is a filler head 13 comprising a body 15 to be mounted inclined according to a predetermined angle regarding the gravity direction in the vehicle 41. According to the invention, the predetermined angle may be comprised between 0° and 60° when considering the gravity direction. This angle range allows a good flow with help of the gravity together with an easy introduction of a distribution nozzle 10 in the filler head 13.

The filler head 13 comprises a main part 17 closed by a cover part 19 so as to form a cavity 20. According to a first example, the cover part 19 may be secured to the main part 17 in a sealed manner by welding. Thus, a unique welding is used during the manufacturing process allowing the improvement of cycle time and associated costs.

According to a second example, the cover part 19 may be secured to the main part 17 in a sealed manner by snap-fitting a sealing ring 24 between the cover part 19 and the main part 17. Thus, the manufacturing process can avoid the use of welding step allowing an easier process.

The cover part 19 may comprise a protruding guiding element 18 to guide the distribution nozzle 10 to a separating device 21 (as explained below) so as to allow a better mechanical protection of its cylindrical wall 23. Preferably, the protruding guiding element 18 is closed in a sealed manner by screwing a cap (not shown) when nozzle 10 is not received in the separating device 21.

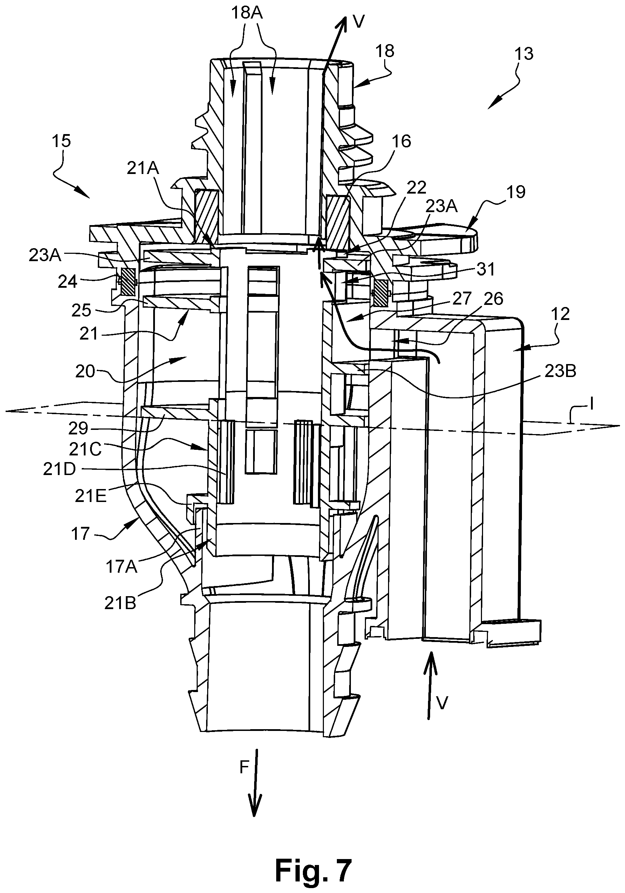

As illustrated in figure 5 and 7, the cover part 19 may include a magnet 16 circumferentially of the protruding guiding element 18 so as to activate, by a magnetic field, the valve of the nozzle 10 when the tank 3 is of urea type permitting the delivery of urea solution.

Moreover, the inner surface of the protruding guiding element 18 has at least one groove 30 so as, when nozzle 10 is received in the protruding guiding element 18 to allow the flow V coming from the venting line 11 to be expelled outside the filler head 13 via the at least one groove 30.

The main part 17 may include a plurality of ribs 17B (four ribs 17B visible on figure 6) so as to receive the separating device 21 against the upper end of each rib 17B (by abutting with the below surface of the lower flange 29). Thus, the separating device 21 can be easily removable from the cavity 20 so as to be replaceable. The separating device 21 can thus be replaced with a different geometry to fit another kind or dimensions of nozzle 10 and/or tank 3.

The filler head 13 may further comprise a buffer volume 12 in one-piece with the main part 17 so as to reduce the speed of flow V coming from the venting line 11. This configuration allows a further improvement regarding the aim of avoiding any spitting from the filler head. As function of the sensor type, the buffer volume 12 is comprised between 80 ml and 140 ml, preferably between 90 ml and 130 ml and more preferably between 94 ml and 129 ml. More precisely, the more upstream is the sensor of the nozzle when considering the filling direction F, the bigger the buffer volume 12 is.

Specifically, the buffer volume 12 configured to be connected to the venting line 11 and to reduce the speed of flow V coming from the venting line 11. Thus, in the exemplary embodiment of figures 2-8, the buffer volume 12 being in one-piece laterally with the main part 17. A common wall of the main part 17 and the buffer volume 12 comprises an aperture 26 allowing the passage of the flow V coming from the venting line 11 into the cavity 20 of the body 15. As it can be seen in notably figures 5, 7 and 8, the aperture 26 is as high as possible in the buffer volume to facilitate a smooth flow V to the top of the filler head 13.

The buffer volume 12 can thus be as far as possible from the tank 3. Advantageously, a better reduction of the speed of the flow V coming from the venting line 11 is obtained as well as a better bursting of the air bubbles along the wall of the buffer volume 12 regardless the volume of the tank 3 and/or the refilling rate. Moreover, with help of the separating device 21, the flows F, V are advantageously better partitioned in the cavity 20 between a flow F of fluid outgoing from the nozzle 10 and a flow V of fluid coming from the venting line 11 in the body 15 so as to avoid the activation of the auto-stop function of the distribution nozzle until the tank 3 is effectively full.

According to the invention, the separating device 21, preferably hung in the cavity 20 of the body 15, is configured to receive, in its cylindrical wall 21C extending around the filling direction F, the distribution nozzle 10 as shown in the exemplary embodiment of figure 5. The separating device 21 is arranged to improve the partitioning of the flow V coming from the venting line 11 and the flow F going to the filling line 9. Thus, as illustrated in figure 5, sensor mounted at the tip of the nozzle 10 is in plane I (ZVA nozzle sensor) when nozzle 10 abuts against internal ribs 21D of the cylindrical wall 21C. All technical effects and results of the invention are advantageously also applicable even if sensor (Horn and PIUSI nozzle sensors) is located in the upstream direction of the nozzle 10 when considering the filling direction F (may be as far as 16 mm from the tip of the nozzle 10).

According to a first aspect of the invention, the separating device 21 comprises a top end 21A facing the cover part 19 of the body 15 that comprises at least one notch 22 improving, when the nozzle 10 is received in the cylindrical wall 21C of the separating device 21, the pressure balance in the filler head 13 so as to ensure that the fluid outgoing from the nozzle 10 has limited possibility to spit back from the filler head 13 during the auto-stop nozzle 10 shut off. Indeed, at the moment of the auto-stop nozzle 10 shut off, it has been observed that the internal pressure in the cylindrical wall 21C may raise abruptly. With help of the notches 22, a better fluid circulation between internal and external volume of the cylindrical wall 21C is obtained so as to avoid a lower pressure to be exerted in the region between the top end 21A and the cover part 19 that may incur locally a suction effect of the additive solution near the tip of the nozzle 10 sufficiently high to expel it from the filler head 13.

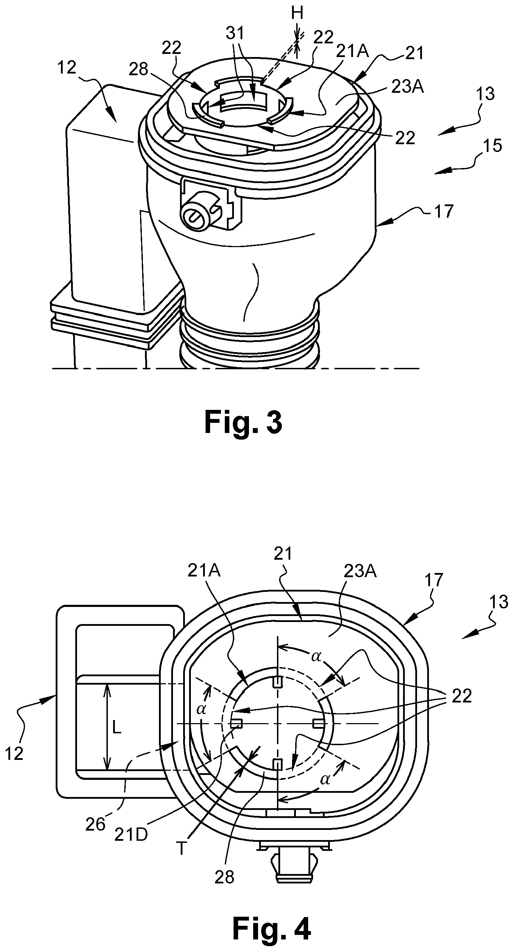

In the exemplary embodiment of figures 3-4, the top end 21A of the separating device 21 is an annular wall 28 in which each notch 22 (three in figures 3-4) forms a through passage regarding in the thickness T of the annular wall allowing a better fluid communication between internal and external volume of the cylindrical wall 21C by increasing locally the gap between the top end 21A and the cover part 19. In the exemplary embodiment of figures 3, it can be seen that the three notches 22 are present along the entire height H of the annular wall 28 till the upper flange 23A. Moreover, the notches 22 are each regularly distributed around the filling Flow V direction according to an angle of approximately hundred-and-twenty degrees and each empties the annular wall 28 at an angle α of approximately sixty degrees around the filling Flow V direction permitting an improved pressure balance between internal and external volume of the cylindrical wall 21C.

According to a second aspect of the invention, the cylindrical wall 21C comprises at least one hole 31 in the top end 21A of the separating device 21 downstream the upper flange 23A permitting to the flow V of fluid coming from the venting line 11 to pass through the cylindrical wall 21C as close as possible of the cover part 19. As visible in the exemplary embodiment of figures 5 and 7, the flow V of fluid coming from the venting line 11 (via the buffer volume 12) passes through the cylindrical wall 21C as far as possible from the tip of the nozzle 10 (plan I) in order to be expelled outside the filler head 13.

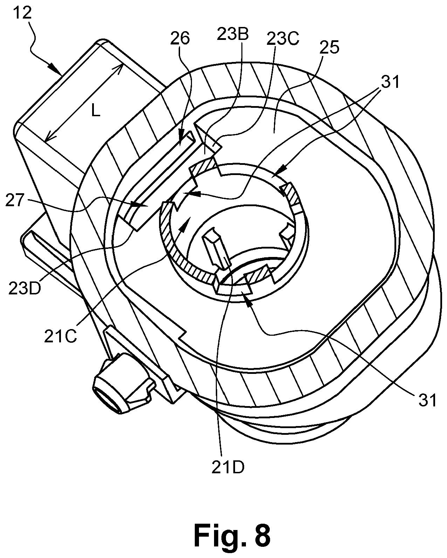

Moreover, at least four flanges 23A, 23B, 23C, 23D (two horizontal flanges 23A, 23B and two vertical flanges 23C, 23D), protruding transversally from the outside surface of the cylindrical wall 21C and mounted surrounding the aperture 26 of the buffer volume 12 so as to form a channel 27 towards the at least one hole 31 permitting to improve the partitioning of the flow V coming from a venting line 11 and the flow F going to the filling line 9. Thus, when emerging from the aperture 26, the flow V coming from a venting line 11 is substantially only able to communicate with the at least one hole 31 in an upstream level in view of the filling flow V direction. As better show in figure 8, the channel 27 leads to the holes 31 level which bottom is formed by the shielding flange 25. It can also be seen that length L of the aperture 26 is substantially equal to these of the buffer volume 12 and the channel 27. This configuration ensures a laminar flow F of the fluid outgoing from the nozzle 10 towards the filling line 9 in the body 15, and a direct venting V of fluid through the cylindrical wall 21C coming from the venting line 11. This configuration thus also permits to limit any fluid dispensing shut off/breakdown during refilling stage.

According to a third aspect of the invention, the shielding flange 25, protruding transversally from the outside surface of the cylindrical wall 21C is mounted in the cavity 20 upstream of the sensor of the nozzle 10 (when received in the cylindrical wall 21C) when considering the filling flow F direction. This configuration of the shielding flange 25 ensures the fluid outgoing from the nozzle 10 present in the filler head 13 to have limited possibility to spit back from the filler head 13 without affecting the sensor work.

Thus, a dead volume, downstream the holes 31 level when considering the filling flow F direction, is formed in the cavity 20 between the shielding flange 25 and the lower flange 29 so as to receive eventual passing fluid before reaching the top end 21A of the separating device 21. In other words, the dead volume forms an additional volume to eventually store the fluid that has been slowed by contact with the lower flange 29 to avoid the spitting from the filler head 13 before and during the auto-stop nozzle 10 shut off.

The shielding flange 25 of the separating device 21 covers substantially all the horizontal bottom of the holes 31 level and the lower flange 29 covers substantially all the horizontal section of the cavity 20 (downstream the lower horizontal flange 21B when considering the filling flow F direction). This configuration permits to form a shield substantially above all the upper surface of the fluid present in filler head 13. In other words, it increases the difficulty of the fluid in reaching the dead volume above the lower flange 29 and even more above the shielding flange 25. It can be also seen that below part of the lower flange 29 is substantially in the plan I of the nozzle 10 tip.

According to a fourth aspect of the invention, a bottom end 21B of the separating device 21 facing the main part 17 of the body 15 comprises a securing element 21E mounted onto the external surface of the cylindrical wall 21C. The securing element is configured to cooperate with an internal wall 17A of the main part 17 protruding in the cavity 20 to secure the separation device 21 in the cavity 20 as an extension of the inner wall 17A. This securing function is complementary with those obtained by abutting the below surface of the lower flange 29 against the upper end of each rib 17B.

In the exemplary embodiment of figures 5-7, the securing element 21E and the internal wall 17A has complementary shapes so as to limit the possibility of the fluid to flow between the bottom end 21B of the separating device 21 and the internal wall 17A of the main part 17. Specifically, the internal wall 17A is in at least partially annular shape and the securing element 21E has a hook shape to grab the free end of the internal wall 17A. Therefore, the auto-stop nozzle 10 shut off is improved notably because the sensor is able to sense quicker fluid in the filler head 13. This configuration forms a labyrinth shape between the bottom of the filler head 13 and the separating device 21.

Of course, the present invention is not limited to the embodiments and variants presented but may be subject to various other embodiments and/or variants, which will be apparent to those skilled in the art. Thus, while some embodiments described herein include some but not other features included in other embodiments, combinations of features of different embodiments are meant to be within the scope of the invention, and form different embodiments, as would be understood by those in the art.

It is in particular possible to modify shapes and/or dimensions according to the particular application notably as function of the tank 3 type.

## Claims

1. Filler head (13) for a storage system (1) comprising a body (15) including a main part (17) closed by a cover part (19) so as to form a cavity (20) in which a separating device (21) is received, the filler head (13) being configured to receive, in a cylindrical wall (21C) of the separating device (21) extending around the filling direction (F), a distribution nozzle (10) of a fluid with an auto-stop sensor to prevent overfilling of the filler head (13), the filler head (13) being configured to be connected to a filling line (9) and a venting line (11) of a fluid tank (3) and the separating device (21) being arranged to improve the partitioning of the flow (V) coming from the venting line (11) and the flow (F) going to the filling line (9), **characterised in that** a top end (21A) of the separating device (21) facing the cover part (19) of the body (15) comprises at least one notch (22) improving, when the nozzle (10) is received in the cylindrical wall (21C) of the separating device (21), the pressure balance in the filler head (13) so as to ensure that the fluid outgoing from the nozzle (10) has limited possibility to spit back from the filler head (13) during the auto-stop nozzle (10) shut off.

2. Filler head (13) according to the preceding claim, in which the top end (21A) of the separating device (21) is an annular wall (28), the at least one notch (22) forming a through passage in the thickness (T) of the annular wall (28).

3. Filler head (13) according to the claim 1 or 2, comprising a buffer volume (12) configured to be connected to the venting line (11) and to reduce the speed of flow (V) coming from the venting line (11), the buffer volume (12) being in one-piece laterally with the main part (17), a common wall of the main part (17) and the buffer volume (12) comprising an aperture (26) allowing the passage of the flow (V) coming from the venting line (11) into the cavity (20) of the body (15).

4. Filler head (13) according to the preceding claim, in which the cylindrical wall (21C) comprises at least one hole (31) in the top end (21A) of the separating device (21) that allows the flow (V) of fluid coming from the venting line (11) to pass through the cylindrical wall (23) in order to be expelled outside the filler head (13) and at least four flanges (23A, 23B, 23C, 23D), protruding transversally from the outside surface of the cylindrical wall (21C) and mounted surrounding the aperture (26) of the buffer volume (12) so as to form a channel (27) towards the at least one hole (31) permitting to improve the partitioning of a flow (V) coming from a venting line (11) and the flow (F) going to the filling line (9).

5. Filler head (13) according to any one of the preceding claims, in which the cover part (19) comprises a protruding guiding element (18) to guide the distribution nozzle to the separating device (21).

6. Filler head (13) according to the preceding claim, in which the protruding guiding element (18) is closed in a sealed manner by a cap when nozzle (10) is not received in the separating device (21).

7. Filler head (13) according to the claim 5 or 6, in which the inner surface of the protruding guiding element (18) has at least one groove (30) so as, when nozzle (10) is received in the protruding guiding element (18), to allow the flow (V) coming from the venting line (11) to be expelled outside the filler head (13) via the at least one groove (30).

8. Filler head (13) according to any one of the preceding claims, in which a bottom end (21B) of the separating device (21) facing the main part (17) of the body (15) comprises a securing element (21E) mounted onto the external surface of the cylindrical wall (21C) so as to cooperate with an internal wall (17A) of the main part (17) protruding in the cavity (20) to secure the separation device (21) in the cavity (20) as an extension of the inner wall (17A).

9. Filler head (13) according to any one of the preceding claims, in which the securing element (21E) and the internal wall (17A) has complementary shapes so as to limit the possibility of the fluid to flow between the bottom end (21B) of the separating device (21) and the internal wall (17A) of the main part (17).

10. Filler head (13) according to the claim 8 or 9, in which the internal wall (17A) is in at least partially annular shape and the securing element (21E) has a hook shape to grab the free end of the internal wall (17A).

11. Storage system (1) comprising a fluid tank (3) connected to a filling line (9) configured to guide the gravitational flow of fluid from a filler head (13) to the tank (3) and a venting line (11) configured to compensate de pressure variations in the tank (3), **characterised in that** the filler head (13) is according to any one of the preceding claims.

## Patentansprüche

1. Füllkopf (13) für ein Speichersystem (1), aufweisend einen Körper (15) mit einem Hauptteil (17), der durch einen Deckelteil (19) verschlossen ist, um einen Hohlraum (20) zu bilden, in dem eine Trennvorrichtung (21) aufgenommen wird, wobei der Füllkopf (13) konfiguriert ist, um in einer zylindrischen Wand (21C) der Trennvorrichtung (21), die sich um die Füllrichtung (F) herum erstreckt, eine Verteilungsdüse (10) eines Fluids aufzunehmen, mit einem Auto-Stopp-Sensor, um ein Überfüllen des Füllkopfes (13) zu verhindern, wobei der Füllkopf (13) so konfiguriert ist, dass er mit einer Füllleitung (9) und einer Entlüftungsleitung (11) eines Fluidtanks (3) verbunden ist, und die Trennvorrichtung (21) so angeordnet ist, dass sie die Aufteilung des von der Entlüftungsleitung (11) kommenden Stroms (V) und des zur Füllleitung (9) gehenden Stroms (F) verbessert, **dadurch gekennzeichnet, dass** ein oberes Ende (21A) der Trennvorrichtung (21), das dem Deckelteil (19) des Körpers (15) zugewandt ist, mindestens eine Kerbe (22) aufweist, die, wenn die Düse (10) in der zylindrischen Wand (21C) der Trennvorrichtung (21) aufgenommen ist, das Druckgleichgewicht im Füllkopf (13) verbessert, um sicherzustellen, dass das aus der Düse (10) austretende Fluid eine begrenzte Möglichkeit hat, während des automatischen Abschaltens der Düse (10) aus dem Füllkopf (13) zurückzuspritzen.

2. Füllkopf (13) nach dem vorhergehenden Anspruch, bei dem das obere Ende (21A) der Trennvorrichtung (21) eine Ringwand (28) ist, wobei die mindestens eine Kerbe (22) einen Durchgang in der Dicke (T) der Ringwand (28) bildet.

3. Füllkopf (13) nach Anspruch 1 oder 2, aufweisend ein Puffervolumen (12), das so konfiguriert ist, dass es mit der Entlüftungsleitung (11) verbunden werden kann und die Geschwindigkeit der von der Entlüftungsleitung (11) kommenden Strömung (V) reduziert, wobei das Puffervolumen (12) seitlich einstückig mit dem Hauptteil (17) ist, wobei eine gemeinsame Wand des Hauptteils (17) und des Puffervolumens (12) eine Öffnung (26) aufweist, die den Durchgang der von der Entlüftungsleitung (11) kommenden Strömung (V) in den Hohlraum (20) des Körpers (15) ermöglicht.

4. Füllkopf (13) nach dem vorhergehenden Anspruch, bei dem die zylindrische Wand (21C) mindestens ein Loch (31) am oberen Ende (21A) der Trennvorrichtung (21) aufweist, das es dem von der Entlüftungsleitung (11) kommenden Strom (V) ermöglicht, die zylindrische Wand (23) zu durchqueren, um aus dem Füllkopf (13) herauszutreten, und mindestens vier Flansche (23A, 23B, 23C, 23D), die quer von der Außenfläche der zylindrischen Wand (21C) abstehen und die um die Öffnung (26) des Puffervolumens (12) herum angebracht sind, um einen Kanal (27) in Richtung des mindestens einen Lochs (31) zu bilden, der es erlaubt, die Aufteilung eines von einer Entlüftungsleitung (11) kommenden Stroms (V) und des zur Füllleitung (9) gehenden Stroms (F) zu verbessern.

5. Füllkopf (13) nach einem der vorhergehenden Ansprüche, bei dem der Deckelteil (19) ein vorstehendes Führungselement (18) zur Führung der Verteilerdüse zur Trenneinrichtung (21) aufweist.

6. Füllkopf (13) nach dem vorhergehenden Anspruch, bei dem das vorstehende Führungselement (18) durch eine Kappe dicht verschlossen ist, wenn die Düse (10) nicht in der Trennvorrichtung (21) aufgenommen ist.

7. Füllkopf (13) nach Anspruch 5 oder 6, bei dem die Innenfläche des vorstehenden Führungselements (18) mindestens eine Nut (30) aufweist, so dass, wenn die Düse (10) in dem vorstehenden Führungselement (18) aufgenommen ist, der von der Entlüftungsleitung (11) kommende Strom (V) über die mindestens eine Nut (30) nach außerhalb des Füllkopfes (13) ausgestoßen werden kann.

8. Füllkopf (13) nach einem der vorhergehenden Ansprüche, bei dem ein dem Hauptteil (17) des Körpers (15) zugewandtes unteres Ende (21B) der Trennvorrichtung (21) ein Befestigungselement (21E) aufweist, das an der Außenfläche der zylindrischen Wand (21C) so angebracht ist, dass es mit einer in den Hohlraum (20) hineinragenden Innenwand (17A) des Hauptteils (17) zusammenwirkt, um die Trennvorrichtung (21) als Verlängerung der Innenwand (17A) im Hohlraum (20) zu befestigen.

9. Füllkopf (13) nach einem der vorhergehenden Ansprüche, bei dem das Befestigungselement (21 E) und die Innenwand (17A) komplementäre Formen aufweisen, um die Möglichkeit des Fließens der Flüssigkeit zwischen dem unteren Ende (218) der Trennvorrichtung (21) und der Innenwand (17A) des Hauptteils (17) zu begrenzen.

10. Füllkopf (13) nach Anspruch 8 oder 9, bei dem die Innenwand (17A) zumindest teilweise ringförmig ist und das Sicherungselement (21 E) eine Hakenform aufweist, um das freie Ende der Innenwand (17A) zu ergreifen.

11. Speichersystem (1) mit einem Fluidtank (3), der mit einer Füllleitung (9) verbunden ist, die so konfiguriert ist, dass sie den Schwerkraftstrom des Fluids von einem Füllkopf (13) zu dem Tank (3) leitet, und mit einer Entlüftungsleitung (11), die so konfiguriert ist, dass sie Druckschwankungen in dem Tank (3) ausgleicht, **dadurch gekennzeichnet, dass** der Füllkopf (13) nach einem der vorhergehenden Ansprüche ausgebildet ist.

## Revendications

1. Tête de remplissage (13) pour un système de stockage (1) comprenant un corps (15) comprenant une partie principale (17) fermée par une partie formant couvercle (19) de manière à former une cavité (20) dans laquelle un dispositif de séparation (21) est reçu, la tête de remplissage (13) étant configurée pour recevoir, dans une paroi cylindrique (21C) du dispositif de séparation (21) s'étendant autour de la direction de remplissage (F), une buse de distribution (10) d'un fluide avec un capteur d'arrêt automatique pour empêcher le remplissage excessif de la tête de remplissage (13), la tête de remplissage (13) étant configurée pour être connectée à une ligne de remplissage (9) et une ligne de dégazage (11) d'un réservoir de fluide (3) et le dispositif de séparation (21) étant agencé pour améliorer la répartition du débit (V) provenant de la ligne de dégazage (11) et du débit (F) allant à la ligne de remplissage (9), **caractérisé en ce qu'**une extrémité supérieure (21A) du dispositif de séparation (21) faisant face à la partie formant couvercle (19) du corps (15) comporte au moins une encoche (22) améliorant, lorsque la buse (10) est reçue dans la paroi cylindrique (21C) du dispositif de séparation (21), l'équilibre de pression dans la tête de remplissage (13) de manière à garantir que le fluide sortant de la buse (10) ait une possibilité limitée d'asperger en dehors de la tête de remplissage (13) pendant l'arrêt automatique de la buse (10) s'arrête.

2. Tête de remplissage (13) selon la revendication précédente, dans laquelle l'extrémité supérieure (21A) du dispositif de séparation (21) est une paroi annulaire (28), ladite au moins une encoche (22) formant un passage traversant dans l'épaisseur (T) de la paroi annulaire (28).

3. Tête de remplissage (13) selon la revendication 1 ou 2, comprenant un volume tampon (12) configuré pour être connecté à la ligne de dégazage (11) et pour réduire la vitesse d'écoulement (V) provenant de la ligne de dégazage (11), le volume tampon (12) étant en une seule pièce latéralement avec la partie principale (17), une paroi commune de la partie principale (17) et le volume tampon (12) comprenant une ouverture (26) permettant le passage du flux (V) provenant de la ligne de dégazage (11) dans la cavité (20) du corps (15).

4. Tête de remplissage (13) selon la revendication précédente, dans laquelle la paroi cylindrique (21C) comprend au moins un trou (31) dans l'extrémité supérieure (21A) du dispositif de séparation (21) qui permet à l'écoulement (V) du fluide provenant de la conduite de dégazage (11) de passer à travers la paroi cylindrique (23) afin d'être expulsé à l'extérieur de la tête de remplissage (13) et au moins quatre parois (23A, 23B, 23C, 23D), dépassant transversalement de la surface extérieure de la paroi cylindrique (21C) et montés autour de l'ouverture (26) du volume tampon (12) de manière à former un canal (27) vers ledit au moins un trou (31) permettant d'améliorer le partitionnement d'un écoulement (V) provenant d'une conduite de dégazage (11) et du flux (F) allant à la ligne de remplissage (9).

5. Tête de remplissage (13) selon l'une quelconque des revendications précédentes, dans laquelle la partie formant couvercle (19) comprend un élément de guidage saillant (18) destiné à guider la buse de distribution vers le dispositif de séparation (21).

6. Tête de remplissage (13) selon la revendication précédente, dans laquelle l'élément de guidage saillant (18) est fermé de manière étanche par un bouchon lorsque la buse (10) n'est pas reçue dans le dispositif de séparation (21).

7. Tête de remplissage (13) selon la revendication 5 ou 6, dans laquelle la surface intérieure de l'élément de guidage saillant (18) comporte au moins une rainure (30) de sorte que, lorsque la buse (10) est reçue dans l'élément de guidage saillant (18), permettre l'expulsion du flux (V) provenant de la conduite de dégazage (11) à l'extérieur de la tête de remplissage (13) par ladite au moins une rainure (30).

8. Tête de remplissage (13) selon l'une quelconque des revendications précédentes, dans laquelle une extrémité inférieure (21B) du dispositif de séparation (21) faisant face à la partie principale (17) du corps (15) comprend un élément de fixation (21E) monté sur la surface externe de la paroi cylindrique (21C) de manière à coopérer avec une paroi interne (17A) de la partie principale (17) faisant saillie dans la cavité (20) pour fixer le dispositif de séparation (21) dans la cavité (20) comme un prolongement de la paroi intérieure (17A).

9. Tête de remplissage (13) selon l'une quelconque des revendications précédentes, dans laquelle l'élément de fixation (21E) et la paroi interne (17A) ont des formes complémentaires de manière à limiter la possibilité pour le fluide de s'écouler entre l'extrémité inférieure (21B) du dispositif de séparation (21) et la paroi interne (17A) de la partie principale (17).

10. Tête de remplissage (13) selon la revendication 8 ou 9, dans laquelle la paroi interne (17A) est au moins partiellement annulaire et l'élément de fixation (21E) a une forme de crochet pour saisir l'extrémité libre de la paroi interne (17A).

11. Système de stockage (1) comprenant un réservoir de fluide (3) relié à une conduite de remplissage (9) configurée pour guider l'écoulement gravitationnel de fluide d'une tête de remplissage (13) vers le réservoir (3) et une conduite de dégazage (11) configurée pour compenser les variations de pression dans le réservoir (3), **caractérisé en ce que** la tête de remplissage (13) est conforme à l'une quelconque des revendications précédentes.
